# EUROPEAN PATENT APPLICATION

(11) **EP 4 721 877 A1**
(43) Date of publication of application: **08.04.2026**
(21) Application number: 25786944.6
(22) Date of filing: 10.04.2025
(51) Int. Cl.: B05C 5/02, G01B 11/14, G01B 5/14, G01B 3/26, H01M 4/04

(54) **SLOT DIE ALIGNMENT APPARATUS**

(30) Priority: 12.04.2024 KR 20240049335
(71) Applicant: LG Energy Solution, Ltd., Seoul 07335 (KR)
(72) Inventor: PARK, Min Gu, Daejeon 34122 (KR); CHOI, Min Hyuck, Daejeon 34122 (KR); KIM, Guk Tae, Daejeon 34122 (KR); KIM, Min Cheol, Daejeon 34122 (KR); MOON, Young Gyu, Daejeon 34122 (KR)
(74) Representative: Plasseraud IP
(86) International application number: PCT/KR2025/004890
(87) International publication number: WO 2025/216572

(57) **Abstract**

Disclosed herein relates to a slot die alignment device including: at least one position control unit that is coupled to a slot die to adjust the position of a shim plate and to measure the position of the shim plate, wherein the position control unit includes: a jig configured to be detachable at the front end of a slot die; and a control unit that is coupled to the jig to allow sliding on the jig.

## Description

### [Technical Field]

The present disclosure relates to a technology for precisely adjusting the position of a shim plate included in a slot die.

This application claims the benefit of Korean Patent Application No. 10-2024-0049335, filed on April 12, 2024, the disclosure of which is incorporated herein by reference.

### [Background]

Rechargeable secondary batteries are attracting attention as a power source for devices requiring high output and large capacity, including electric vehicles, hybrid electric vehicles, and plug-in hybrid electric vehicles, which have been proposed as solutions to address issues such as air pollution caused by conventional gasoline and diesel vehicles that use fossil fuels.

In terms of battery shape, there is high demand for prismatic secondary batteries and pouch-type secondary batteries, which can be applied to products like mobile phones due to their thin thickness. In terms of materials, there is high demand for lithium-ion batteries and lithium-ion polymer batteries, which have advantages such as high energy density, discharge voltage, and output stability.

Generally, lithium secondary batteries have a structure where an electrode assembly consisting of a positive electrode, a negative electrode, and a separator is immersed in a lithium electrolyte. The electrodes are formed by coating an electrode slurry containing electrode active material onto an electrode current collector, and coating devices such as a slot die are used for coating the electrode slurry.

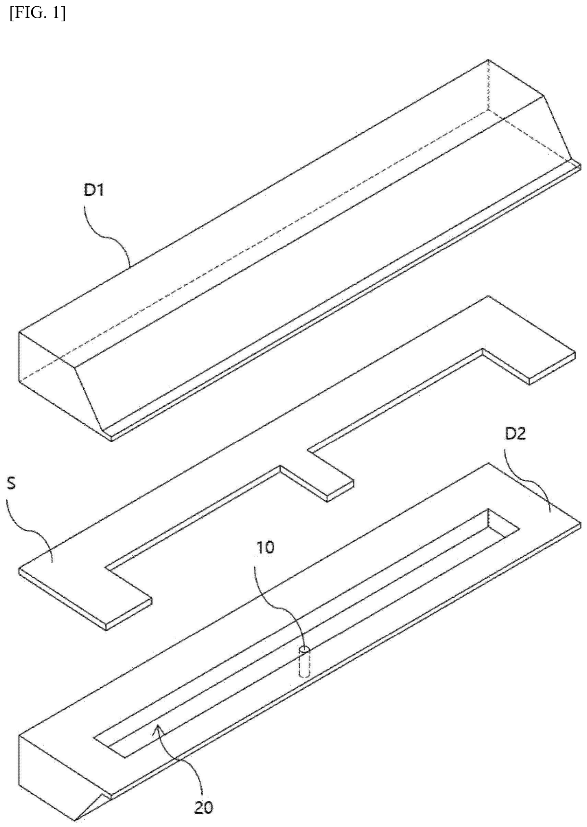

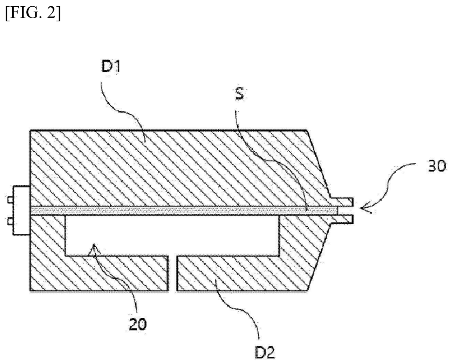

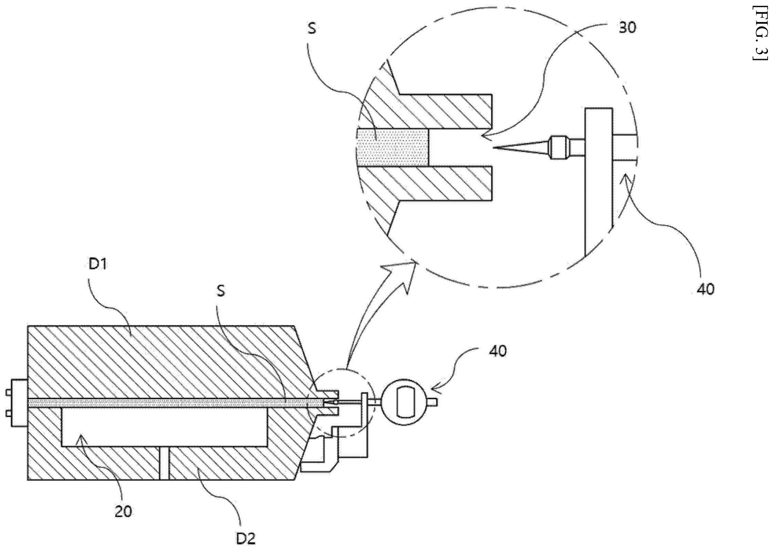

FIG. 1 is an exploded perspective view of a conventional slot die (D), FIG. 2 is a cross-sectional view of the center part of the conventional slot die (D) cut along the width direction, and FIG. 3 is a schematic diagram showing the conventional position adjuster applied to the slot die (D) in FIG. 2.

The slot die (D) includes a first die (D1) and a second die (D2) that form a chamber for supplying the active material slurry and set the height of the slot for discharging the active material slurry, and a shim plate (S) disposed between them to set the width of the slot.

Generally, the active material slurry enters the manifold (20) space between the first die (D1) and the second die (D2) through the inlet (10), and the active material slurry filled in the manifold (20) is discharged through the outlet (30) located at the front by being guided by the shim plate (S). At this time, the position of the shim plate (S) can be an important parameter in the coating process.

Conventionally, the position of the shim plate (S) was measured and adjusted manually using an electron microscope, but this method had the drawback of low precision.

Recently, to address the above issues, a position adjuster was used, as shown in FIG. 3, which includes a dial gauge (40) for measuring the position of the shim plate (S) and a micrometer (not shown) for adjusting the position of the shim plate (S).

However, the above method of aligning the shim plate (S) was time-consuming, and it was difficult to inspect the alignment status at various positions of the slot die (D).

### [Prior Art Document]

Korean Public Patent No. 10-2023-0078497

### [Summary]

### [Technical Problem]

Therefore, the present disclosure aims to provide a slot die alignment device that can more precisely control the position of a shim plate included in a slot die.

Additionally, the present disclosure aims to provide a slot die alignment device that allows for easy adjustment of the position of a shim plate.

Other objects and advantages of the present disclosure will be understood from the following description, which will become more apparent with reference to the embodiments of the present disclosure. It will also be readily apparent that the objects and advantages of the present disclosure may be realized by the means and combinations thereof set forth in the claims of the patent.

### [Technical Solution]

According to the present disclosure, a slot die alignment device is provided, including: at least one position control unit that is coupled to a slot die to adjust a position of a shim plate and to measure the position of the shim plate, wherein the position control unit includes: a jig configured to be detachable at a front end of the slot die; and a control unit that is coupled to the jig to allow sliding on the jig.

The control unit may include: a measuring unit for measuring the position of the shim plate included in the slot die; and a position adjustment unit configured to press and move the shim plate.

The jig includes a guide hole for guiding the movement of the control unit, wherein the control unit may move reciprocally in a horizontal direction on the guide hole.

The measuring unit and the position adjustment unit may move independently on the guide hole.

The control unit may further include at least one sliding member that fixes the measuring unit and the position adjustment unit, and that is inserted into the guide hole to slide along the guide hole.

The measuring unit and the position adjustment unit may each be coupled to a pair of sliding members that moves by being inserted into the guide hole.

The guide holes may be formed to extend corresponding to the entire length of the front end of the slot die.

The jig may include: the guide hole; a support member extending from a lower end of the guide hole; and a coupling member that is coupled to the support member and the slot die to fix the support member to the slot die.

The jig may include at least two support members.

A plurality of position control unit may be coupled to a single slot die.

### [Advantageous Effects]

According to the present disclosure, the position of the shim plate included in the slot die can be precisely controlled to improve process efficiency.

Additionally, according to the present disclosure, the process time can be reduced by facilitating the position control of the shim plate.

### [Brief Description of the Drawings]

FIG. 1 is an exploded perspective view of a conventional slot die.
FIG. 2 is a cross-sectional view of the center part of a conventional slot die cut along the width direction.
FIG. 3 is a schematic diagram showing the slot die of FIG. 2 with the conventional position adjuster applied.
FIG. 4 is a perspective view of a slot die alignment device according to the first embodiment of the present disclosure.
FIG. 5 is a front view of the slot die alignment device according to the first embodiment of the present disclosure.
FIG. 6 is a partial exploded perspective view of the slot die alignment device according to the first embodiment of the present disclosure, with the control unit separated.
FIG. 7 is a plan view of the slot die alignment device according to the first embodiment of the present disclosure.
FIG. 8 is a perspective view of a slot die and the slot die alignment device according to the first embodiment of the present disclosure coupled thereto.
FIG. 9 is a schematic diagram showing an enlarged view of the slot die alignment device of FIG. 8.
FIG. 10 is a front view of a slot die alignment device according to the second embodiment of the present disclosure.
FIG. 11 is a perspective view of a slot die and the slot die alignment device according to the second embodiment of the present disclosure coupled thereto.
FIG. 12 is a front view of the slot die alignment device according to the third embodiment of the present disclosure.
FIG. 13 is a front view of a slot die alignment device according to the fourth embodiment of the present disclosure.
FIG. 14 is a perspective view of a slot die and the slot die alignment device according to the fourth embodiment of the present disclosure coupled thereto.
FIG. 15 is a front view of a slot die alignment device according to the fifth embodiment of the present disclosure.
FIG. 16 is a perspective view of a slot die and the slot die alignment device according to the fifth embodiment of the present disclosure coupled thereto.

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

In the present disclosure, the term "slit" refers to a through-hole having a long axis extending in one direction and a short axis perpendicular to the long axis, and includes cases where the shape is rectangular, elliptical, or bead-shaped.

The present disclosure relates to a slot die alignment device.

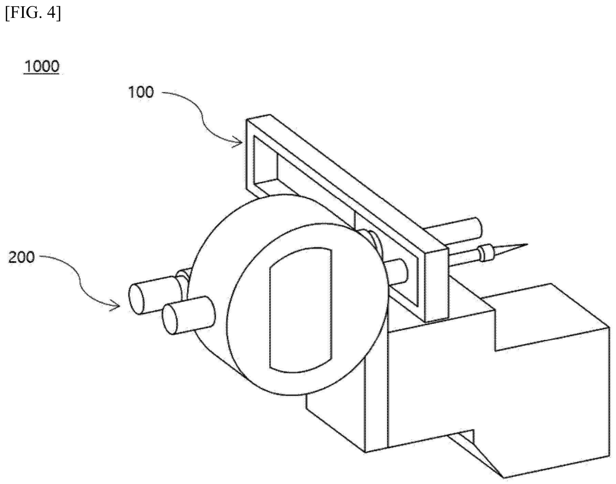

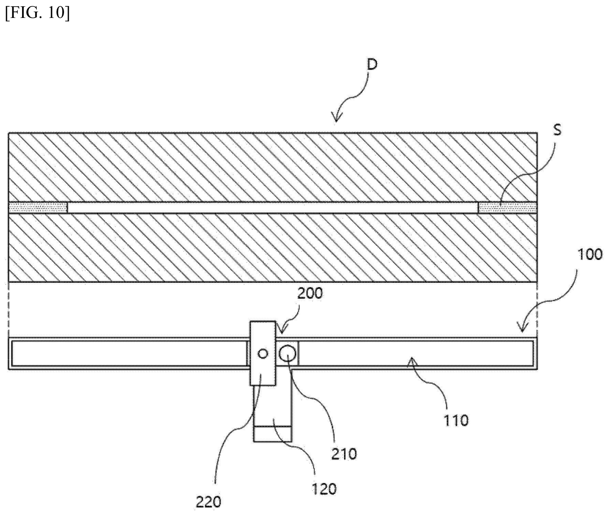

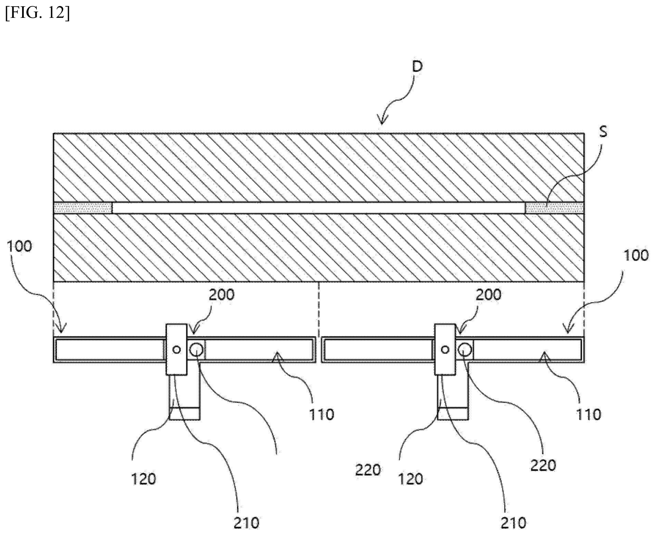

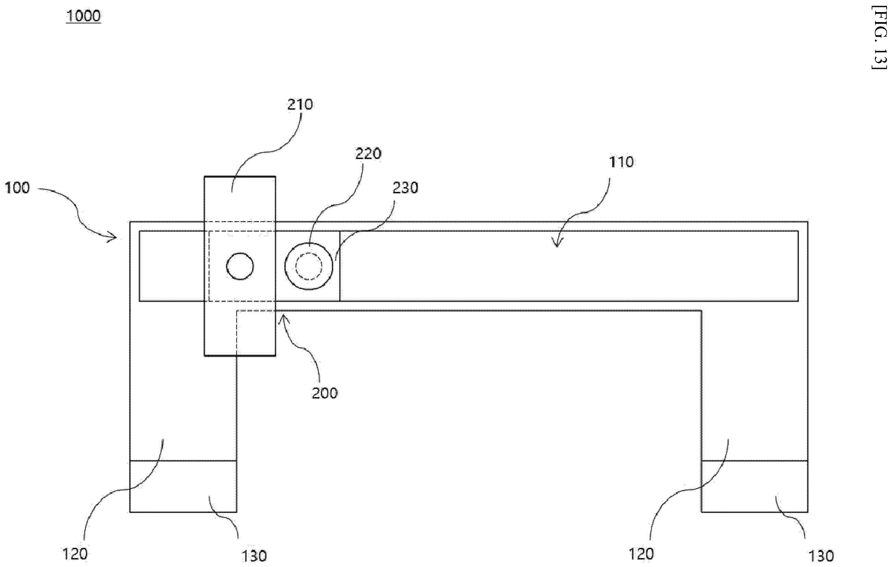

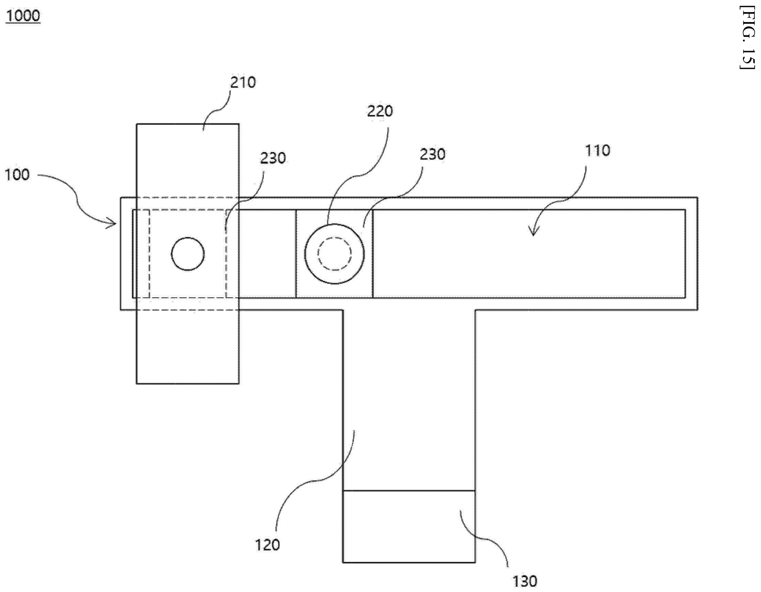

FIGS. 4 to 9 relate to a slot die alignment device according to the first embodiment of the present disclosure, FIGS. 10 to 11 relate to a slot die alignment device according to the second embodiment of the present disclosure, FIG. 12 relates to a slot die alignment device according to the third embodiment of the present disclosure, FIGS. 13 to 14 relate to a slot die alignment device according to the fourth embodiment of the present disclosure, and FIGS. 15 to 16 relate to a slot die alignment device according to the fifth embodiment of the present disclosure.

Hereinafter, with reference to the accompanying drawings, the specific embodiments of the slot die alignment device of the present disclosure will be described in detail. For reference, the directions such as front/back and up/down/left/right used in the following description to specify relative positions are for the purpose of facilitating understanding of the disclosure, and unless otherwise defined, are based on the direction shown in the drawings.

Additionally, the longitudinal direction of any configuration refers to the direction corresponding to the longest dimension of the configuration as shown in the drawings, with the horizontal direction as the reference, and the width direction of any configuration refers to the direction perpendicular to the longitudinal direction based on the horizontal direction.

### (First Embodiment)

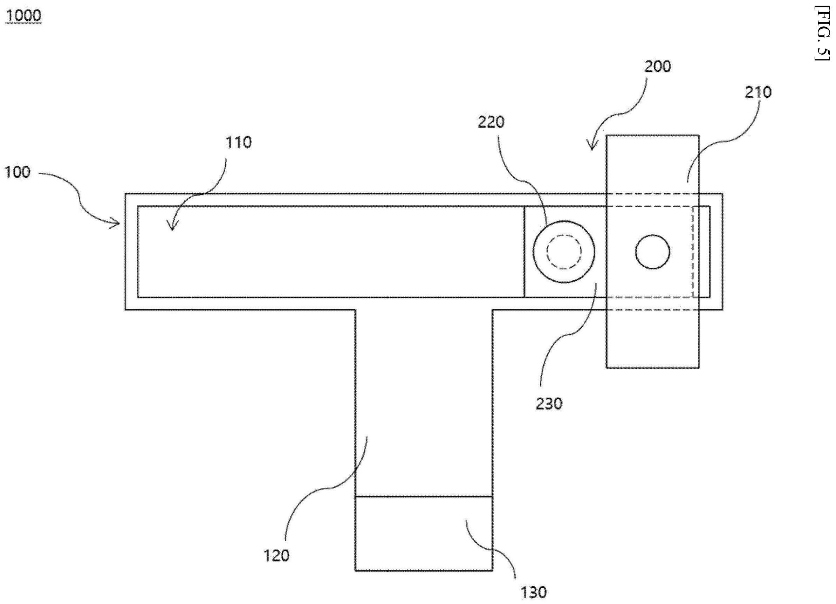

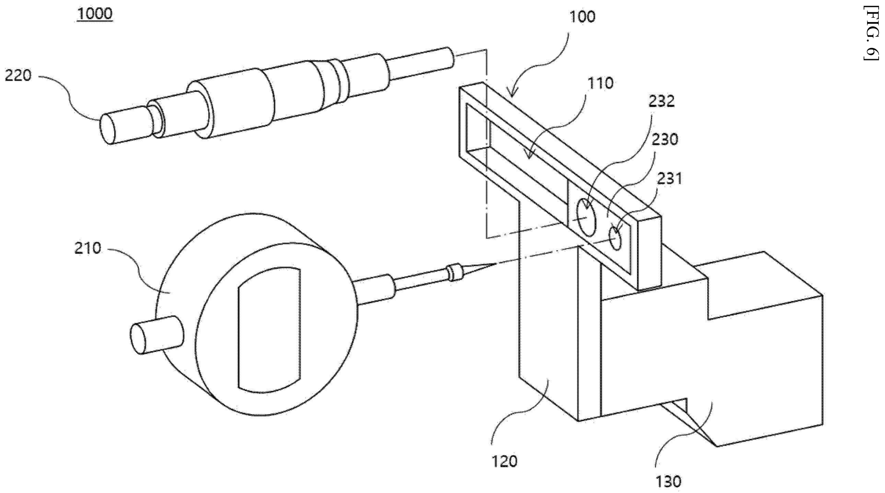

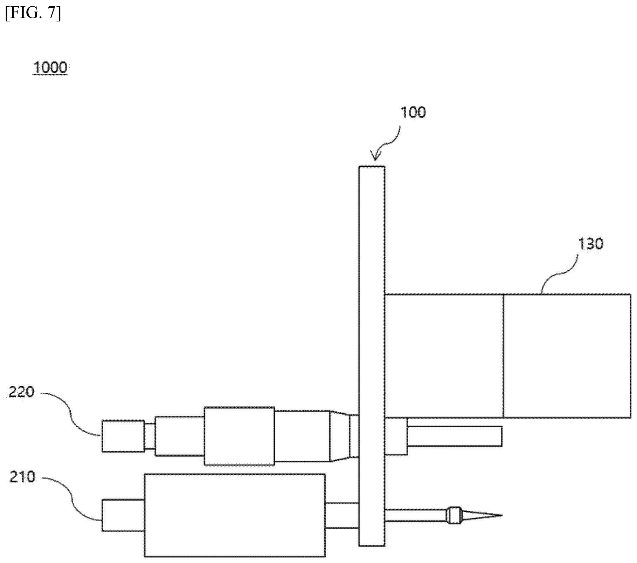

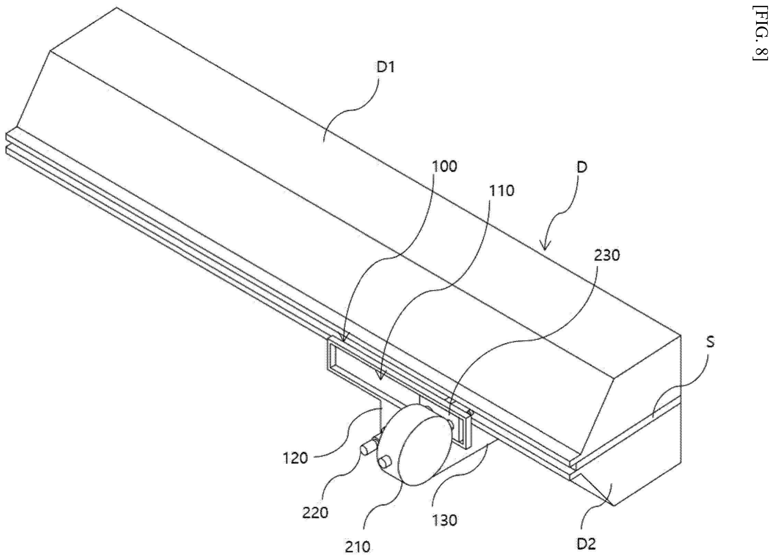

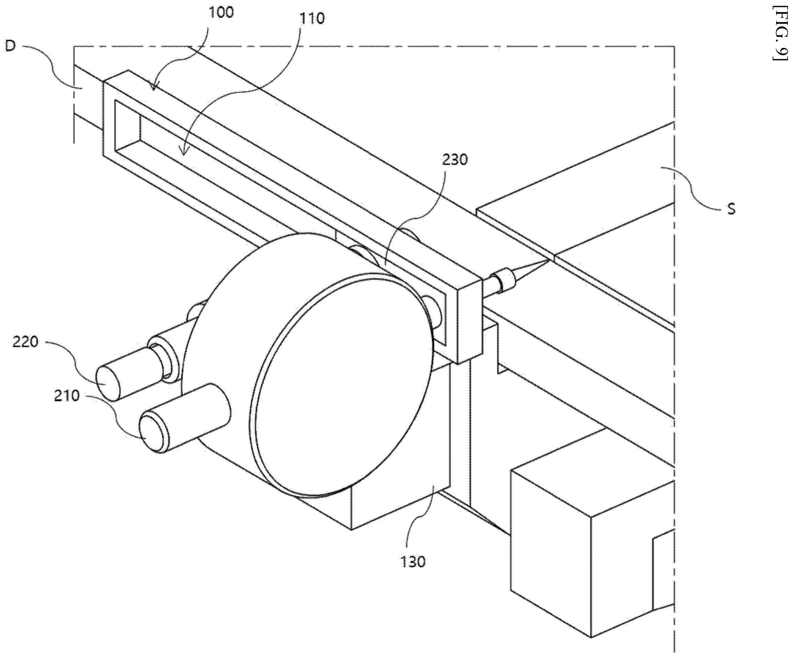

FIG. 4 is a perspective view of a slot die alignment device according to the first embodiment of the present disclosure, FIG. 5 is a front view of the slot die alignment device according to the first embodiment of the present disclosure, FIG. 6 is a partial exploded perspective view of the slot die alignment device according to the first embodiment of the present disclosure, with the control unit 200 separated, FIG. 7 is a plane view of a slot die alignment device according to the first embodiment of the present disclosure, FIG. 8 is a perspective view of a slot die and the slot die alignment device according to the first embodiment of the present disclosure coupled thereto, and FIG. 9 is a schematic diagram showing an enlarged view of the slot die alignment device of FIG. 8.

The slot die alignment device of the present disclosure is characterized by aligning a slot die that includes a first die, a second die coupled to the first die, and a shim plate interposed between the first die and the second die.

The slot die alignment device of the present disclosure includes at least one position control unit 1000 that is coupled to the slot die as shown in FIG. 8, adjusts the position of the shim plate, and measures the position of the shim plate.

The position control unit 1000 includes a jig 100 configured to be detachably attached to the front end of the slot die, and a control unit 200 coupled to the jig 100 so as to be slidable thereon.

The jig 100 includes a guide hole 110 for guiding the movement of the control unit 200.

The guide holes 110 are formed to extend in one direction.

The slot die alignment device of the present disclosure is coupled to the slot die such that the extension direction of the guide hole 110 is horizontal with respect to the longitudinal direction of the slot die, as shown in FIG. 8.

More specifically, the jig 100 further includes a support member 120 and a coupling member 130 in addition to the guide hole 110.

The slot die alignment device according to the first embodiment of the present disclosure includes one support member 120 and one coupling member 130 in one jig 100.

The coupling member 130 is a portion directly coupled to the slot die and is coupled to either the first die or the second die.

The coupling member 130 is coupled to the support member 120 and the slot die to fix the support member 120 to the slot die.

In coupling the coupling member 130 to the slot die, any coupling method is permissible as long as the jig 100 can be fixed so that it does not shake.

In some embodiments, the coupling member 130 may be threadedly coupled to the slot die via bolts, etc.

According to some other embodiments, the coupling member 130 may include a magnetic material and may be coupled to the slot die through the magnetism.

The support member 120 is configured to extend from the lower end of the guide hole 110 so that the guide hole 110 and the coupling member 130 can be connected.

The support member 120 is coupled to the coupling member 130 such that the guide hole 110 is at the same height as the shim plate.

According to some embodiments, the extent to which the support member 120 extends may vary depending on the thickness and type of the slot die. That is, when the thickness of the second die to which the coupling member 130 is coupled is large, the length of the support member 120 may be longer accordingly. Conversely, as the thickness of the second die decreases, the length of the support member 120 may correspondingly decrease.

Therefore, the guide hole 110 can be securely fixed to the slot die by the coupling member 130 and the support member 120 coupled to the coupling member 130.

The control unit 200 can move by being guided by the guide hole 110.

That is, the control unit 200 is configured to be reciprocally movable in the horizontal direction on the guide hole 110.

The control unit 200 includes a measuring unit 210 and a position adjustment unit 220.

The measuring unit 210 and position adjustment unit 220 included in the slot die alignment device of the present disclosure contact the end part of the shim plate of the slot die to move the shim plate and measure the displacement of the moving shim plate in real time.

The measuring unit 210 measures the position of the end part of the shim plate interposed between the first die and the second die, as shown in FIG. 9.

Specifically, the measuring unit 210 measures the position of the end part of the shim plate located on the same plane relative to the front outer side of the first die and the second die.

The measuring unit 210 may be applied without special limitation as long as it is capable of measuring the end part positions of the shim plate. For example, the measuring unit 210 may be a dial gauge as shown in FIGS. 4 to 9. Alternatively, the measuring unit 210 may be any one of an eddy current displacement sensor, an optical displacement sensor, a linear proximity sensor, or a magnetic resistance displacement sensor.

The position adjustment unit 220 adjusts the end part position of the shim plate interposed between the first die and the second die, as shown in FIG. 9.

Specifically, the position adjustment unit 220 is provided at a position adjacent to the measuring unit 210 and moves the shim plate toward the rear of the slot die. At this time, the displacement of the shim plate caused by the adjustment of the position adjustment unit 220 can be measured in real time by the measuring unit 210.

The position adjustment unit 220 may be applied without special restrictions as long as it can precisely change the displacement of the shim plate. For example, the position adjustment unit 220 may be a micrometer, as shown in FIGS. 4 to 9.

The control unit 200 may include at least one sliding member 230 inserted into the guide hole 110 to slide along the guide hole 110, and to fix the measuring unit 210 and the position adjustment unit 220.

The sliding member 230 may include a first insertion hole 231 and a second insertion hole 232 into which the measuring unit 210 and the position adjustment unit 220 can be inserted, respectively, as shown in FIG. 6.

The measuring unit 210 and position adjustment unit 220 inserted into the first insertion hole 231 and second insertion hole 232, respectively, are securely fixed to the sliding member 230 so as not to shake.

Although not shown, the jig 100 may further include a fixing unit that restricts the movement of the sliding member 230 to fix the sliding member 230 at a specific position of the guide hole 110. For example, the fixing unit may be in the form of a clamp used to restrict the movement of general objects or to fix them in a specific position. Alternatively, the fixing unit may be in the form of a screw that is fastened to pass through the guide hole 110 and apply pressure around the perimeter of the sliding member 230.

The sliding member 230 can move freely within the area where the guide hole 110 extends. Therefore, the measuring unit 210 and the position adjustment unit 220 can adjust and measure the position of the shim plate at all positions within the movable area of the sliding member 230.

### (Second Embodiment)

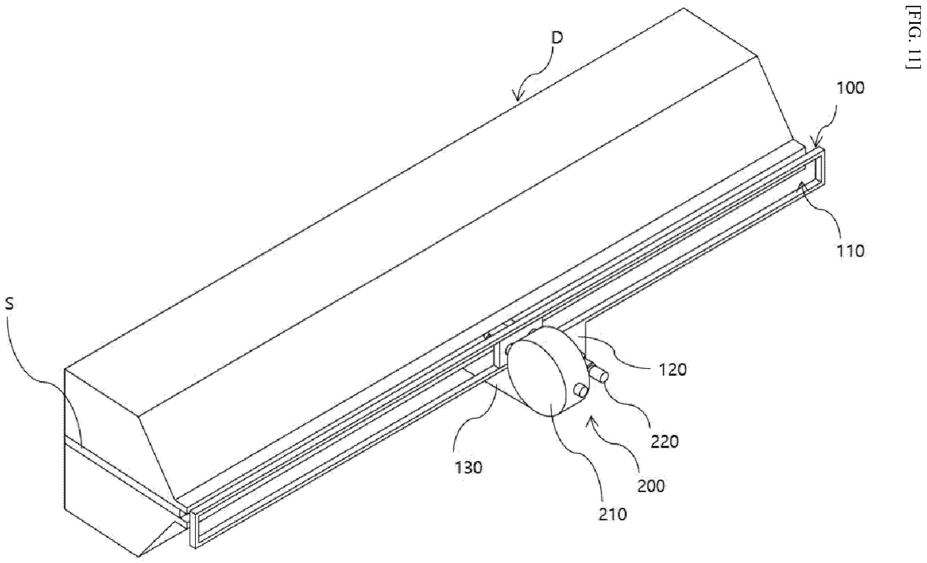

FIG. 10 is a front view of a slot die alignment device according to the second embodiment of the present disclosure, and FIG. 11 is a perspective view of a slot die and the slot die alignment device according to the second embodiment of the present disclosure coupled thereto.

The slot die alignment device according to the second embodiment of the present disclosure is characterized in that the guide hole 110 is extended to correspond to the entire length of the front end of the slot die, as shown in FIGS. 10 and 11.

That is, by fixing a single jig 100 to the slot die, the control unit 200 can be moved so that it corresponds to the entire front end of the shim plate included in the slot die.

### (Third Embodiment)

FIG. 12 is a front view of the slot die alignment device according to the third embodiment of the present disclosure.

The slot die alignment device according to the third embodiment of the present disclosure is characterized by having a plurality of position control units 1000 coupled to a single slot die.

Each of the position control units 1000 may be configured such that the guide holes 110 are positioned adjacent to each other, as shown in FIG. 12. By positioning the position control units 1000 in this manner, the position adjustment and displacement measurement of the entire shim plate front end can be performed stably.

According to some embodiments, each position control unit 1000 may be positioned such that the guide holes 110 are spaced apart at a predetermined distance. That is, each position control unit 1000 may be coupled at positions where the position of the shim plate tends to shift or requires adjustment.

### (Fourth Embodiment)

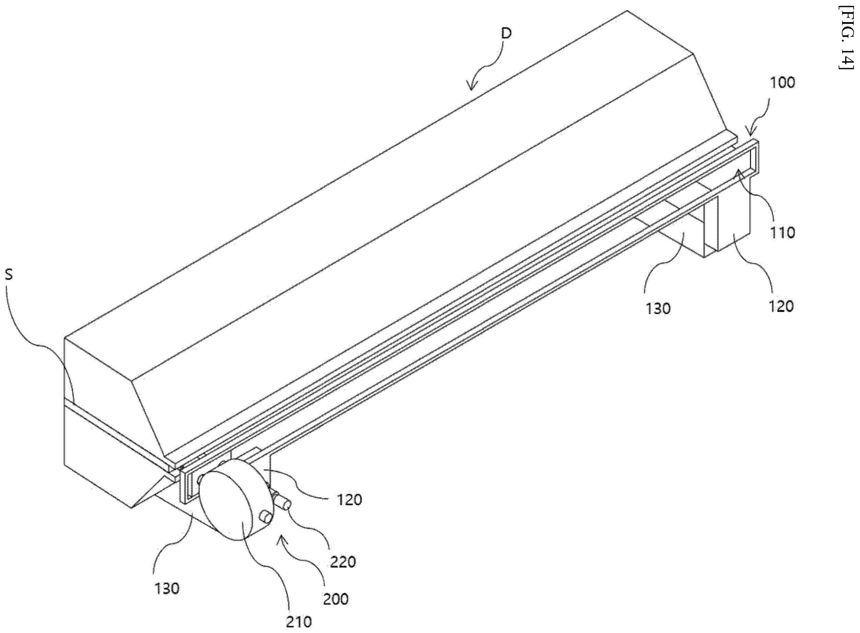

FIG. 13 is a front view of a slot die alignment device according to the fourth embodiment of the present disclosure, and FIG. 14 is a perspective view of a slot die and the slot die alignment device according to the fourth embodiment of the present disclosure coupled thereto.

The slot die alignment device according to the fourth embodiment of the present disclosure is characterized in that a single jig 100 includes at least two support members 120.

In some embodiments, each support member 120 may be coupled to a coupling member 130.

In some other embodiments, as shown in FIGS. 13 and 14, separate coupling members 130 may be coupled to each support member 120.

As the length of the guide hole 110 of the jig 100 increases, the guide hole 110 may bend, which may reduce the accuracy of the alignment process of the measuring unit 210 and the position adjustment unit 220. Additionally, the bending of the guide hole 110 may cause issues with the movement of the sliding member 230 within the guide hole 110.

Therefore, the support member 120 may be provided in plurality to distribute the various forces acting on the guide hole 110.

### (Fifth Embodiment)

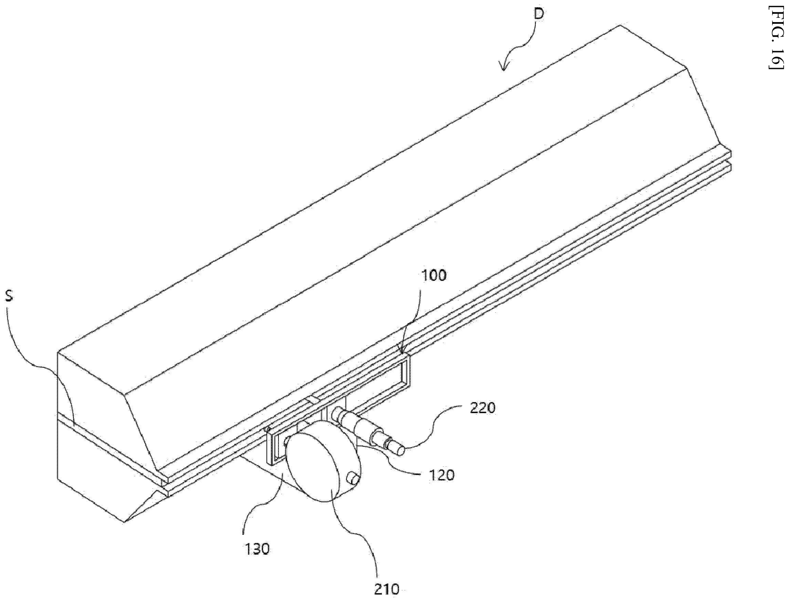

FIG. 15 is a front view of a slot die alignment device according to the fifth embodiment of the present disclosure, and FIG. 16 is a perspective view of a slot die and the slot die alignment device according to the fifth embodiment of the present disclosure coupled thereto.

The slot die alignment device according to the fifth embodiment of the present disclosure is characterized in that the measuring unit 210 and the position adjustment unit 220 move independently on the guide hole 110.

Specifically, a pair of sliding members 230 separated from each other can be coupled to the guide hole 110, and either the measuring unit 210 or the position adjustment unit 220 is coupled to each of the sliding members 230. In this case, one of the sliding members 230 includes only a first insertion hole 231, and the other sliding member 230 includes only a second insertion hole 232.

Therefore, the measuring unit 210 and the position adjustment unit 220 can be positioned at a distance from each other on the guide hole 110 by the pair of sliding members 230.

The slot die alignment device with such a structure allows the position of one region of the shim plate to be moved while detecting the positional displacement of another region of the shim plate.

The present disclosure has been described in more detail above with reference to the drawings and embodiments. However, it should be understood that the configurations shown in the drawings or embodiments described herein are only one embodiment of the disclosure and do not represent all of the technical ideas of the disclosure, and that there may be various equivalents and modifications that may be substituted for them at the time of filing the present application.

### [Description of Reference Numerals]

D: SLOT DIE
D1: FIRST DIE
D2: SECOND DIE
S: SHIM PLATE
10: (PRIOR ART) INLET
20: (PRIOR ART) MANIFOLD
30: (PRIOR ART) OUTLET
40: (PRIOR ART) DIAL GAUGE
1000: POSITION CONTROL UNIT
100: JIG
110: GUIDE HOLE
120: SUPPORT MEMBER
130: COUPLING MEMBER
200: CONTROL UNIT
210: MEASURING UNIT
220: POSITION ADJUSTMENT UNIT
230: SLIDING MEMBER
231: FIRST INSERTION HOLE
232: SECOND INSERTION HOLE

## Claims

1. A slot die alignment device comprising:
at least one position control unit that is coupled to a slot die to adjust a position of a shim plate and to measure the position of the shim plate, wherein
the position control unit comprises:
a jig configured to be detachable at a front end of a slot die; and
a control unit that is coupled to the jig to allow sliding on the jig.

2. The slot die alignment device of claim 1, wherein
the control unit comprises:
a measuring unit for measuring the position of the shim plate included in the slot die; and
a position adjustment unit configured to press and move the shim plate.

3. The slot die alignment device of claim 2, wherein
the jig comprises a guide hole for guiding the movement of the control unit, wherein
the control unit moves reciprocally in a horizontal direction on the guide hole.

4. The slot die alignment device of claim 3, wherein
the measuring unit and the position adjustment unit move independently on the guide hole.

5. The slot die alignment device of claim 3, wherein
the control unit further comprises at least one sliding member that fixes the measuring unit and the position adjustment unit, and that is inserted into the guide hole to slide along the guide hole.

6. The slot die alignment device of claim 5, wherein
the measuring unit and the position adjustment unit are each coupled to a pair of sliding members that moves by being inserted into the guide hole.

7. The slot die alignment device of claim 3, wherein
the guide holes are formed to extend corresponding to an entire length of the front end of the slot die.

8. The slot die alignment device of claim 3, wherein
the jig comprises:
the guide hole;
a support member extending from a lower end of the guide hole; and
a coupling member that is coupled to the support member and the slot die to fix the support member to the slot die.

9. The slot die alignment device of claim 8, wherein
the jig comprises at least two support members.

10. The slot die alignment device of claim 1, wherein
a plurality of position control unit is coupled to a single slot die.
